# EUROPÄISCHE PATENTANMELDUNG

(11) **EP 2 241 946 A1**
(43) Veröffentlichungstag der Anmeldung: **20.10.2010**
(21) Anmeldenummer: 10001976.9
(22) Anmeldetag: 26.02.2010
(51) Int. Cl.: G05B 11/36, G05B 13/04, G05B 17/02, G05B 19/404

(54) **Verfahren zur Ermittlung von Reglerparametern einer Regelungseinrichtung zur Antriebsregelung eines Antriebssystems**

(30) Priorität: 15.04.2009 DE 102009017090
(71) Anmelder: FESTO AG & Co. KG, 73734 Esslingen (DE)
(72) Erfinder: Neumann, Rüdiger, 73760 Ostfildern (DE); Hartmann, Armin, 73760 Ostfildern (DE); Hildebrandt, Alexander, 72669 Unterensingen (DE); Dietrich, Joachim, 73760 Ostfildern (DE)
(74) Vertreter: Vetter, Hans

(57) **Zusammenfassung**

Es wird ein Verfahren zur Ermittlung von Reglerparametern einer Regelungseinrichtung zur Antriebsregelung eines Antriebssystems, insbesondere eines Linearantriebs, vorgeschlagen. Dieses Verfahren beruht auf einer automatisierten, modellgestützten Reglerinbetriebnahme, wobei ein Gesamtsystemmodell in Form einer Software erzeugt wird, mit dem und mit der dem Antriebssystem zugeordneten Regelungsstruktur der Regelungseinrichtung dann die optimalen Reglerparameter berechnet werden, die dann in die Regelungseinrichtung geladen werden. Hierdurch können in einfacher weise auch Zustandsregler für Antriebssysteme realisiert werden, bei denen eine bis zu hundertfach höhere Lastträgheit in Bezug auf die Motorträgheit vorliegt.

## Beschreibung

Die Erfindung betrifft ein Verfahren zur Ermittlung von Reglerparametern einer Regelungseinrichtung zur Antriebsregelung eines Antriebssystems, insbesondere eines Linearantriebs. In bekannter Weise werden heutzutage elektrische Linearachsen wie Spindel- oder Zahnriemenantriebe üblicherweise mit einer Kaskadenregelung betrieben, wie sie beispielsweise aus der DE 10137496 A1 bekannt ist. Nahezu alle kommerziellen Regelungseinrichtungen weisen eine unterlagerte PI-Stromregelung, eine PI-Drehzahlregelung und einen P-Lageregler auf. Der Vorteil dieser Struktur ist die einfache sukzessive Inbetriebnahme und ein robustes Regelungsverhalten. Diese Regelung arbeitet problemlos für Antriebe ohne Elastizitäten im Antriebsstrang, dagegen nicht für solche mit Elastizität im Antriebsstrang, wie dies insbesondere bei Zahnriemenantrieben und Spindelachsen der Fall ist. Diese besitzen eine ausgeprägte Elastizität, die durch die Kupplung und durch die Nachgiebigkeit des Riemens oder der Spindelmutter hervorgerufen wird. Die Regelungsaufgabe wird weiter noch dadurch erschwert, dass in der Regel nur die Position am Motor, also vor dem elastischen Bereich des Antriebssystems, gemessen wird.

Das Konzept der Kaskadenregelung bei elastischen Antriebssträngen und Antriebssystemen kommt an seine Grenzen, wenn die Abtriebslast beispielsweise um einen Faktor 10 höher als die Motorträgheit ist. Deshalb werden heute oft Getriebe eingesetzt, um die Regelbarkeit zu erhalten. Die Getriebe wären aber aufgrund des verfügbaren Moments eigentlich nicht notwendig und stellen einen zusätzlichen unerwünschten Kostenfaktor dar. Eine andere Möglichkeit bestünde darin, einen größeren Motor zu verwenden, jedoch führt auch diese Maßnahme zu unnötigen höheren Kosten und darüber hinaus zu einem großvolumigeren und schwereren Antriebssystem.

Durch eine Zustandsregelung mit Störgrößenbeobachtung, wie sie beispielsweise aus der EP 0340595 A1 bekannt ist, kann auf ein Getriebe verzichtet werden und trotzdem ein sehr großer Trägheitsfaktor bei gutem Folge- und Positionierverhalten realisiert werden. Beispielsweise ist eine hundertfach höhere Lastträgheit in Bezug auf die Motorträgheit ohne weiteres möglich.

Das Konzept der Zustandsregelung ist seit vielen Jahren bekannt und wurde auch bereits in zahlreichen Dissertationen auf Antriebssysteme mit Elastizität, wie eine Zahnriemenachse oder ein Robotergelenk, angewandt und gezeigt, dass die erzielbaren Regelungsresultate deutlich besser sind. Trotzdem gibt es heute so gut wie keinen Antriebsregler auf dem Markt, bei dem ein Zustandsregler zur Schwingungsdämpfung eingesetzt wird. Der Grund hierfür liegt insbesondere in der komplizierten Auslegung der Regelungsverstärkungen beziehungsweise Reglerparameter. Eine sukzessive Parameterbestimmung durch Inbetriebnahme ist im Gegensatz zur Kaskadenregelung nicht möglich. Es ist zwingend erforderlich, dass eine Reihe von Regler- und Beobachterverstärkungen beziehungsweise Reglerparametern genau zueinander passen und gleichzeitig eingestellt werden müssen, da ansonsten die gesamte Regelstrecke instabil werden kann. Dies ist ein sehr aufwendiges und kompliziertes Verfahren, das bei Veränderung einer Teilkomponente des Antriebssystems wieder neu durchgeführt werden muss. Auch das in der eingangs genannten EP 0340595 A1 beschriebene Verfahren ist sehr kompliziert und zeitaufwendig.

Eine Aufgabe der vorliegenden Erfindung besteht darin, ein Verfahren der eingangs genannten Gattung aufzuzeigen, bei dem eine automatisierte Reglerinbetriebnahme insbesondere auch bei Zustandsreglern schnell und einfach ermöglicht wird.

Diese Aufgabe wird erfindungsgemäß durch ein Verfahren mit den Merkmalen des Anspruchs 1 gelöst.

Das erfindungsgemäße Verfahren hat den Vorteil einer automatisierten, modellgestützten Inbetriebnahme insbesondere von Zustandsreglern und schafft durch die schnelle und automatische Ermittlung der Reglerparameter über ein Gesamtsystemmodell die Voraussetzung für den Einsatz solcher modernen Regelungssysteme in der Praxis. Das erfindungsgemäße Verfahren ist jedoch auch für Kaskadenregler vorteilhaft einsetzbar, da es auch dort die schnelle und einfache Ermittlung der Reglerparameter und damit der Regelungsstruktur ermöglicht. Nach Bildung des Gesamtsystemmodells in Form einer Software kann die Reglerstruktur und können die Reglerparameter praktisch auf Knopfdruck abgerufen und in die Regelungseinrichtung geladen werden.

Durch die in den Unteransprüchen aufgeführten Maßnahmen sind vorteilhafte Weiterbildungen und Verbesserungen des im Anspruch 1 angegebenen Verfahrens möglich.

In einer ersten vorteilhaften Variante des erfindungsgemäßen Verfahrens wird das Gesamtsystemmodell aus parametrierten Teilmodellen und/oder Komponenten des Antriebssystems gebildet. Die Parameter der Teilmodelle und/oder Komponenten werden dabei vorzugsweise aus Speichermedien eingelesen und/oder sind in einem Speicher der Regeleinrichtung wenigstens teilweise gespeichert und werden entsprechend den jeweiligen Teilmodellen des Antriebssystems ausgewählt.

In einer zweiten vorteilhaften Variante des erfindungsgemäßen Verfahrens wird das Gesamtsystemmodell über Identifikationsmessung bestimmt, insbesondere durch Frequenzgangmessungen und darauf aufbauende Modellparameterbestimmung.

Das erfindungsgemäße Verfahren eignet sich insbesondere bei einer Regelungsstruktur der Regelungseinrichtung als Zustandsregler mit Störgrößenbeobachtung. Zur Parametrierung des Zustandsreglers wird dabei in vorteilhafter Weise auf eines der folgenden bekannten Verfahren zurückgegriffen: Polvorgabe, Riccatti-Kalmanfilter-Entwurf oder robuster Entwurf über H2 oder Hinf.

Das erfindungsgemäße Verfahren kann jedoch auch für eine Regelungsstruktur der Regelungseinrichtung vorteilhaft eingesetzt werden, die als Kaskadenregler, insbesondere als P-PI-Kaskadenregler, ausgebildet ist. Zur Parametrierung des Kaskadenreglers werden dabei die Parameter vorzugsweise mit Hilfe des Nyquistkriteriums von dem unterlagerten Stromregler, dem unterlagerten Geschwindigkeitsregler und dem Lageregler sukzessive über eine Parameteroptimierung bestimmt. Ein Ausführungsbeispiel der Erfindung ist in der Zeichnung dargestellt und in der nachfolgenden Beschreibung näher erläutert. Es zeigen:
- Figur 1: ein Blockschaltbild einer als Zustandsregler ausge- bildeten Regelungseinrichtung zur Antriebsregelung eines Antriebssystems,
- Figur 2: eine als Kaskadenregler ausgebildete Regelungsein- richtung zur Antriebsregelung eines Antriebssystems und
- Figur 3: ein Ablaufdiagramm zur Erläuterung des erfindungs- gemäßen Verfahrens als Ausführungsbeispiel der Er- findung.

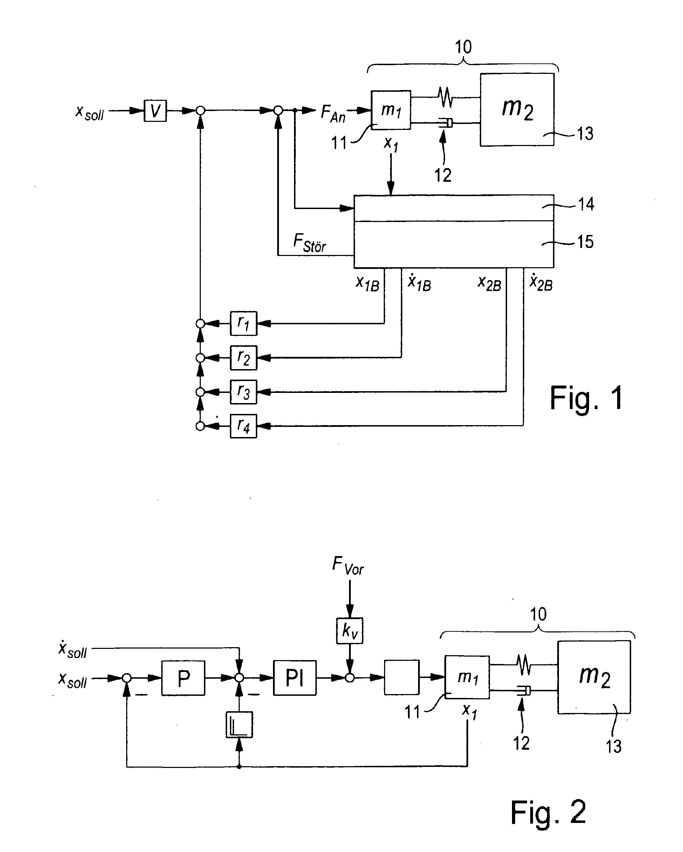

Die in Figur 1 als Beispiel eines Zustandsreglers dargestellte Regelungseinrichtung dient zur Positionierung eines Antriebssystems 10, bei dem ein Motor 11 über elastische Antriebsstränge 12 eine Abtriebslast 13 positioniert. Derartige elastische Antriebsstränge sind beispielsweise Spindel- oder Zahnriemenantriebe beziehungsweise Spindelachsen oder Zahnriemenachsen, wobei die Elastizität durch die Kupplung und die Nachgiebigkeit des Riemens beziehungsweise der Spindelmutter hervorgerufen wird. Bei einer solchen Zustandsregelung mit Störgrößenbeobachtung kann auf ein Getriebe verzichtet werden, jedoch kann ein solches dennoch vorhanden sein. Als solcher Zustandsregler eignet sich insbesondere bei einer im Vergleich zur Motorträgheit m₁ wesentlich höhere Lastträgheit m₂, die bis zu dem Hundertfachen betragen kann.

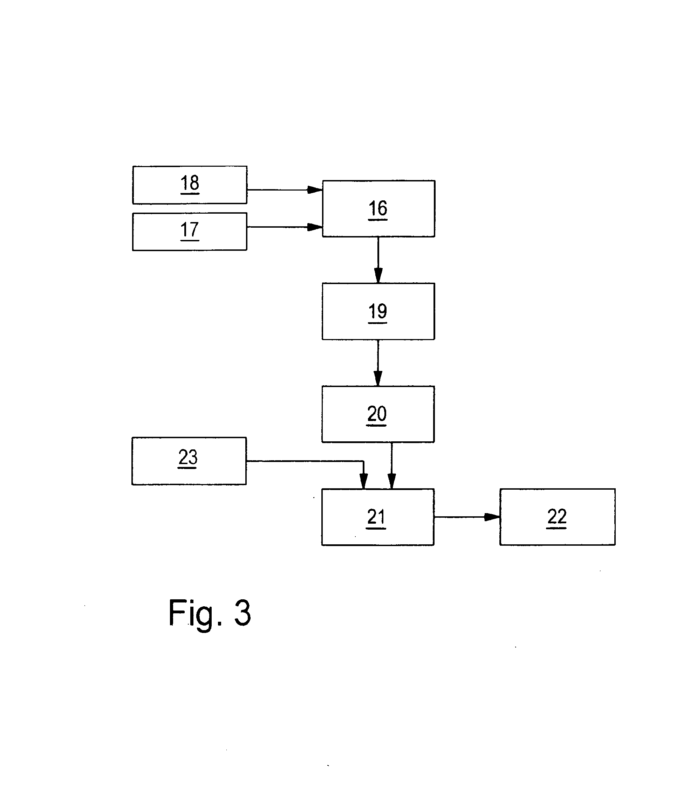

Ein Positions-Istwert X₁ wird zustandsgeregelt in Form eines Werts für die Antriebskraft Fₐₙ dem Motor 11 zugeführt, wobei ein Positions-Istwert x₁ und gegebenenfalls weitere Störgrößen einem Störgrößenbeobachter 14 der Regelungseinrichtung zugeführt werden. In einem daran angeschlossenen Streckenmodell beziehungsweise Störmodell 15 werden die Reglerparameter r₁ bis r₄ gebildet und bei der Regelung eingesetzt. Die Bildung der Reglerparameter gemäß dem erfindungsgemäßen Verfahren wird nachfolgend anhand von Figur 3 erläutert. Die übrigen Komponenten der in Figur 1 dargestellten Regelungseinrichtung sind übliche Komponenten eines Zustandsreglers und beispielsweise in der eingangs angegebenen EP 0340595 A1 detailliert beschrieben, so dass hier auf eine detaillierte Beschreibung verzichtet werden kann.

In Figur 3 ist das Verfahren zur automatisierten und modellgestützten Reglerinbetriebnahme anhand von Teilschritten erläutert. Es beruht im Wesentlichen auf der Bildung eines Gesamtsystemmodells in Form einer Software. Zur Bildung dieses Gesamtsystemmodells müssen alle Parameter der Teilmodelle beziehungsweise Komponenten der Regelungseinrichtung und der Antriebsregelung bekannt sein. Zunächst muss eine Komponentendatenbank 16 für die Teilmodelle gebildet werden. Die Daten aller möglichen Komponenten können dabei in dieser Komponentendatenbank 16 gespeichert sein oder sie werden aus einer externen Datenbank kabelgebunden oder drahtlos, zum Beispiel über das Internet, eingelesen. Die Daten können dabei auch in diese Komponentendatenbank 16 in einem Einlesevorgang 17 aus verschiedenen Speichermedien eingelesen werden, in denen sie abgelegt sind, beispielsweise aus dem EEPROM, über einen Barcode-Leser, wobei derartige Barcodes beispielsweise auf dem Typenschild der Achse, des Getriebes, des Motors und des Umrichters vorhanden sein können. Es können auch andere Speichermedien, wie RFID oder Flashkarten, genutzt werden, die die Systemkonfiguration der Komponenten enthalten. Über einen Eingabevorgang 18 kann der Nutzer aus den gespeicherten Daten der Komponentendatenbank 16 diejenigen auswählen, die beim jeweiligen Antriebssystem 10 realisiert sind.

Die Teilmodelle beziehungsweise Komponenten müssen nun im Parametrierungsschritt 19 parametriert werden. Die zu ermittelnden beziehungsweise festzuhaltenden Parameter sind die Steifigkeit der Elastizität in Abhängigkeit des jeweiligen Antriebs (zum Beispiel Spindel-/Zahnriemenantrieb und Kupplung), die Drehträgheit der Umlenkrollen oder die Spindelträgheit, die Masse des Abtriebsschlittens, der Nutzlast und der Kupplungskomponenten, die Steifigkeit der Vorschubeinheit, wie zum Beispiel die der Spindelmutter, und andere Parameter, die von der Art der Antriebseinheit sowie der Achstypen abhängen, die sehr unterschiedlich sein können, wie zum Beispiel Spindelachsen, Zahnriemenachsen, Auslegerachsen, Rotationsantriebe und dergleichen. Die Parameter für das mögliche Getriebe, sofern vorhanden, sind die Übersetzung, die Drehträgheit, die Reibung und die Elastizität. Der Motor 11 wird über die Drehträgheit, den Widerstand, die Induktivität, die Motor- sowie EMK-Konstante und dergleichen charakterisiert. Der Motorregler hat das Parameter, die Zwischenkreisspannung, die maximale Leistung, den Innenwiderstand und dergleichen. Diese Parameter sind in den eingespeicherten Daten der Teilmodelle beziehungsweise Komponenten enthalten und werden im Parametrierschritt 19 diesen Daten entnommen. Durch die freie Kombinierbarkeit von beispielsweise drei Controllern für die Regelungseinrichtung, achtzehn Motoren, drei Getrieben und mehr als fünfzig verschiedenen Achsen können die Reglerparameter nicht für eine bestimmte Kombination vorab bestimmt werden, zum Beispiel aus Inbetriebnahme-Versuchen, sondern müssen für die jeweils vorliegende Kombination durch die Inbetriebnahme-Software zu einem Gesamtmodell verknüpft werden.

Sind alle Teilmodelle parametriert, kann aus den Teilmodellen ein Gesamtsystemmodell im Schritt 20 erstellt werden, was softwaregestützt automatisch erfolgt. Durch das dynamische Modell, das aus den Komponenten aufgebaut wird, können die Modellstruktur (Starrkörpermodell, Zwei- oder Dreimassenschwinger) und die sich daraus ergebenden notwendigen Reglertypen identifiziert werden. Wenn die Elastizität des Antriebssystems zu vernachlässigen ist, wird am besten ein P-PI-Kaskadenregler gewählt, wie er beispielsweise in Figur 2 dargestellt ist. Tritt deutliches schwingungsfähiges Verhalten auf, wird auf einen Zustandsregler gemäß Figur 1 zurückgegriffen. Dieser Zustandsregler ist in Abhängigkeit des verwendeten Messsystems und die Art der Messung (motor-und/oder abtriebsseitige Messung) durch einen Beobachter zu erweitern, um damit die fehlenden Messgrößen zu rekonstruieren.

Mit dem nun in Form einer Software vorliegenden Gesamtsystemmodell und der zum vorhandenen Antriebssystem passenden Regelungsstruktur müssen nun die Regelungsparameter optimiert werden, um im Automatisierungsschritt 21 einen automatisierten Regelungsentwurf zu erhalten. Für die Parametrierung eines Zustandsreglers mit Störgrößenbeobachter kann auf ein in der Literatur beschriebenes Verfahren zurückgegriffen werden, wie die Polvorgabe, einen Riccatti-Kalmanfilter-Entwurf, einen robusten Entwurf über H2 oder Hinf oder dergleichen. Dabei ist festzuhalten, dass es hier nicht um eine spezielle Form eines Zustandsreglers für Antriebsachsen geht, sondern um die Vorgehensweise für die Parameterbestimmung. Nur über die Nutzung einer Datenbank zur Beschreibung der Teilkomponenten und deren Kopplung zu einem Gesamtsystem liegt ein Modell vor, mit dem dann die klassischen Regelungsentwurfsverfahren realisiert werden können.

Liegen nun mit der automatisierten Erstellung des Regelungsentwurfs im automatisierten Schritt 21 die Reglerparameter vor, müssen diese dann im Speichervorgang 22 in das Regelgerät beziehungsweise den Controller der Regelungseinrichtung geladen werden, also gemäß Figur 1 die Reglerparameter r₁ bis r₄. Wichtig dabei ist, dass der komplette Satz von Reglerparametern genutzt wird, da die Reglerparameter genau aufeinander abgestimmt sind. Eine sukzessive Inbetriebnahme wie bei einem Kaskadenregler ist bei einem Zustandsregler wie Beobachter nicht möglich.

Ein alternatives oder optionales Verfahren zur Erzeugung eines Gesamtsystemmodells besteht in der Modellerstellung 23 durch Identifikationsmessung. Dieses Verfahren bietet sich dann an, wenn entsprechende Daten beziehungsweise Parameter von Teilmodellen beziehungsweise Komponenten ganz oder teilweise nicht vorliegen. Es handelt sich dabei praktisch um eine messtechnische Ermittlung des Gesamtsystemmodells. Dies kann mit Hilfe einer Frequenzgangmessung und einer auf dieser aufbauenden Modellparameterbestimmung zur Bildung des Gesamtsystemmodells für den Regelungsentwurf erfolgen. Aus dem so messtechnisch ermittelten Gesamtsystemmodell wird dann in der beschriebenen Weise im Automatisierungsschritt 21 der Regelungsentwurf mit den Reglerparametern gebildet.

Die automatisierte, modellgestützte Reglerinbetriebnahme für ein Antriebssystem, wie es in Verbindung mit Figur 3 erläutert worden ist, kann nicht nur auf Zustandsregler gemäß Figur 1, sondern auch auf Kaskadenregler gemäß Figur 2 angewandt werden. In Figur 2 ist ein Beispiel eines an sich bekannten P-PI-Kaskadenreglers dargestellt, der zur Positionsregelung des Antriebssystems 10 eingesetzt wird. Ein Kaskadenregler ist beispielsweise aus der eingangs genannten DE 10137496 A1 bekannt, so dass auf eine detaillierte Beschreibung eines solchen Kaskadenreglers verzichtet werden kann. Ein solcher Kaskadenregler kann vorteilhaft dann eingesetzt werden, wenn die Elastizität des Antriebssystems 10 vernachlässigt werden kann oder wenn die Lastträgheit nur im Bereich der Motorträgheit liegt oder noch darunter liegt. Bei einem Kaskadenregler können die Parameter sukzessive bestimmt werden, da sie sich gegenseitig nicht oder kaum beeinflussen. Die Erstellung und Optimierung der Reglerparameter kann hier mit Hilfe des Nyquistkriteriums von dem unterlagerten Stromregler, dem unterlagerten Geschwindigkeitsregler und dem Lageregler sukzessive bestimmt werden. Auch für den Fall des Kaskadenreglers werden dann die im Automatisierungsschritt 21 erstellten Reglerparameter im Speichervorgang 22 in der Regelungseinrichtung beziehungsweise im Controller der Regelungseinrichtung abgelegt.

## Patentansprüche

1. Verfahren zur Ermittlung von Reglerparametern (r₁-r₄) einer Regelungseinrichtung zur Antriebsregelung eines Antriebssystems (10), insbesondere eines Linearantriebs, **gekennzeichnet durch** eine automatisierte, modellgestützte Reglerinbetriebnahme, wobei ein Gesamtsystemmodell in Form einer Software erzeugt wird, mit dem und mit der dem Antriebssystem (10) zugeordneten Regelungsstruktur der Regelungseinrichtung dann die optimalen Reglerparameter (r₁-r₄) berechnet werden, die dann in die Regelungseinrichtung geladen werden.

2. Verfahren nach Anspruch 1, **dadurch gekennzeichnet, dass** das Gesamtsystemmodell aus parametrierten Teilmodellen und/oder Komponenten des Antriebssystems (10) gebildet wird.

3. Verfahren nach Anspruch 2, **dadurch gekennzeichnet, dass** die Parameter der Teilmodelle und/oder Komponenten aus Speichermedien eingelesen werden und/oder in einem Speicher der Regeleinrichtung wenigstens teilweise gespeichert sind und entsprechend den jeweiligen Teilmodellen des Antriebssystems (10) ausgewählt werden.

4. Verfahren nach Anspruch 1, **dadurch gekennzeichnet, dass** das Gesamtsystemmodell über Identifikationsmessungen bestimmt wird, insbesondere durch Frequenzgangmessungen und darauf aufbauende Modellparameterbestimmung.

5. Verfahren nach einem der vorhergehenden Ansprüche, **dadurch gekennzeichnet, dass** als Regelungsstruktur der Regelungseinrichtung ein Zustandsregler mit Störgrößenbeobachter (14) ausgewählt wird.

6. Verfahren nach Anspruch 5, **dadurch gekennzeichnet, dass** zur Parametrierung des Zustandsreglers auf eines der folgenden bekannten Verfahren zurückgegriffen wird: Polvorgabe, Riccatti-Kalmanfilter-Entwurf, robuster Entwurf über H2 oder Hinf.

7. Verfahren nach einem der Ansprüche 1 bis 4, **dadurch gekennzeichnet, dass** als Regelungsstruktur der Regelungseinrichtung ein Kaskadenregler ausgewählt wird, insbesondere ein P-PI-Kaskadenregler.

8. Verfahren nach Anspruch 7, **dadurch gekennzeichnet, dass** zur Parametrierung des Kaskadenreglers die Parameter mit Hilfe des Nyquistkriteriums von dem unterlagerten Stromregler, dem unterlagerten Geschwindigkeitsregler und dem Lageregler sukzessive über eine Parameteroptimierung bestimmt werden.
